# EUROPEAN PATENT APPLICATION

(11) **EP 2 000 288 A1**
(43) Date of publication of application: **10.12.2008**
(21) Application number: 07109766.1
(22) Date of filing: 06.06.2007
(51) Int. Cl.: B29C 70/30, B29C 70/08, B29L 22/00, B29K 101/12

(54) **Plastic pressure vessel and method to produce it**

(71) Applicant: Covess, 3530 Houthalen-Helchteren (BE)
(72) Inventor: van Swijgenhoven, Tony, 3510 Hasselt (BE); Seifert, Axel, 3090 Overijse (BE)
(74) Representative: Luys, Marie-José A.H.

(57) **Abstract**

The present invention relates to a method for producing a pressure tight pressure vessel comprising a hollow main body (1) and at least one open end (2,3) which is closed off by an end part (11,12). The end part is fastened to the main body along its circumference (10). The main body (1) is made of a material comprising at least one layer of a thermoplastic film present on an inner side (6) of the main body facing the central volume, the thermoplastic film being fastened to at least one further layer of a thermoplastic film reinforced with continuous fibers. The end part (11,12) is made of a material comprising at least one layer of a thermoplastic film at an inner side (17) of the end part (11,12) facing the central volume, which is fastened to at least a first layer of a thermoplastic film reinforced with a continuous fibrous reinforcing material. The end part (11,12) is produced by applying a first layer of a thermoplastic film over a surface of a mandrel, applying a second layer of a thermoplastic film and continuous fibrous reinforcing material on top of the first layer in such a way that a closed body is produced, dividing the thus obtained closed body into at least a first (11) and a second part (12), at least the first part forming the end part of the main body.

## Description

The present invention relates to a method for producing a pressure tight pressure vessel comprising a hollow main body with a circumferential side wall enclosing a central volume of the vessel and at least one open end which is closed off by an end part, the end part being fastened to the main body at the position of the at least one open end along its circumference, wherein the main body is made of a material comprising at least one layer of a thermoplastic film present on an inner side of the main body facing the central volume, the thermoplastic film being fastened to at least one further layer of a thermoplastic film reinforced with continuous fibers, wherein the end part is made of a material comprising at least one layer of a thermoplastic film at an inner side of the end part facing the central volume, which at least one layer of thermoplastic film is fastened to at least a first layer of a thermoplastic film reinforced with a continuous fibrous reinforcing material, according to the preamble of the first claim.

Pressure tight vessels of the kind described above are often used for containing a medium under pressure, for example a fluid or gas under pressure. Typical applications are the use of such vessels as a boiler storing hot water.

Such a pressure vessel is for example known from EP-A-1.359.352. The pressure vessel disclosed in EP-A-1.359.352 comprises a substantially cylindrical main body, which is made of a composite material comprising an outer and/or inner layer of a thermoplastic material which sandwich between them a central layer of a fibrous reinforced thermoplastic material. The inner thermoplastic layer provides chemical resistance to fluids contained in the vessel and improves the gas tightness of the material. At least one end of the main body is closed off with a dome shaped end part. The end part comprises an inner and an outer layer of fibrous reinforced thermoplastic material, which sandwich between them a layer of thermoplastic material. As a fibrous reinforcing material use is made of a material containing continuous fibers, i.e. fibers having a length of at least 25 mm. The circumferential edge of the dome shaped end part comprises a circumferential wedge shaped slit for receiving a beveled protrusion with a complementary shape present on a circumferential edge of the cylindrical main body. The cylindrical main body and end part are fastened to each other by spin welding according to which one of the parts is spun, left to freely rotate and contacted with the other part which is held stationary. Friction created along the contact surface heats both surfaces until molten. Thereafter the material is cooled and the connection is established. The dome shaped end part is produced by making a stack of thermoplastic and fibrous reinforcing materials, heating it to fuse the layers and cutting it in a round shape. The round piece is shaped over a shaping die or compression moulded in a closed mould.

The known pressure vessel however presents the disadvantage that spin welding along the circumferential edge provides a connection which may show defects, as a consequence of which the vessel shows insufficient pressure resistance. There is thus a need to a pressure vessel with an improved pressure resistance. Besides that, production of the dome shaped end parts is too complicated and time consuming.

It is therefore the object of the present invention to provide a method for producing a pressure vessel made of composite material with an improved pressure resistance.

This is achieved according to the present invention with a method showing the technical features of the characterizing part of the first claim.

Thereto, the method of this invention is characterized in that the end part is produced by
- applying a first layer of a thermoplastic film over a surface of a mandrel,
- applying a second layer of a thermoplastic film and continuous fibrous reinforcing material on top of the first layer in such a way that a closed body is produced,
- dividing the thus obtained closed body into at least a first and a second part, at least the first part forming the end part of the main body.

The technique of winding reinforcing fibers around a mandrel is a simple and economically feasible process, even for producing large parts. This in contrast to injection moulding in a mould having the shape of the part to be produced, which becomes too expensive when used to produce parts with larger dimensions.

According to a preferred embodiment of this invention, the first end part is fastened in circumferential direction to the circumferential side wall of the main body at the at least one open end from the inner side of the main body, in order to achieve a connection with an improved pressure resistance and reliability. More preferably fastening of the first end part to the main body is carried out using a technique selected from glueing, welding, induction welding and laser welding. Fastening of the end part to the main body using the technique of induction welding or laser welding permits achieving a reliable connection, as the laser weld can be inspected for defects and the process of laser welding can be repeated one or more times until a connection is achieved showing the envisaged minimum of deficiencies. Repeating the laser welding does not damage the main body or the end part, nor does it adversely affect the structural properties of the main body and end part.

According to a preferred embodiment of the invention two end parts can be produced in one time by using a mandrel with the shape of a closed rounded figure with at least one symmetry plane defining a first and a second mandrel part at least part of which is dome shaped, wherein the closed body formed around the mandrel is cut along the symmetry plane, thus providing two dome shaped end parts.

According to another preferred embodiment of the invention the end part is fastened along an outer circumferential rim on an outer wall of the end part, to an inner face of the side wall of the main body, at the position of the at least one open end. It is further preferred to have the end part somewhat countersunk with respect to the circumferential side wall of the main body. This way of fastening provides a vessel with an improved pressure resistance. As a result, the thickness of the wall of the end part can be reduced without adversely affecting the pressure resistance of the vessel.

The present invention also relates to the further preferred embodiments disclosed in the dependent claims.

The present invention further relates to a pressure vessel a such.

The invention is further elucidated in the appending figures and description of the figures.

Figure 1 shows a cross section of a first preferred embodiment of the pressure vessel of this invention.

Figure 2 shows a cross section of a second preferred embodiment of the pressure vessel of this invention.

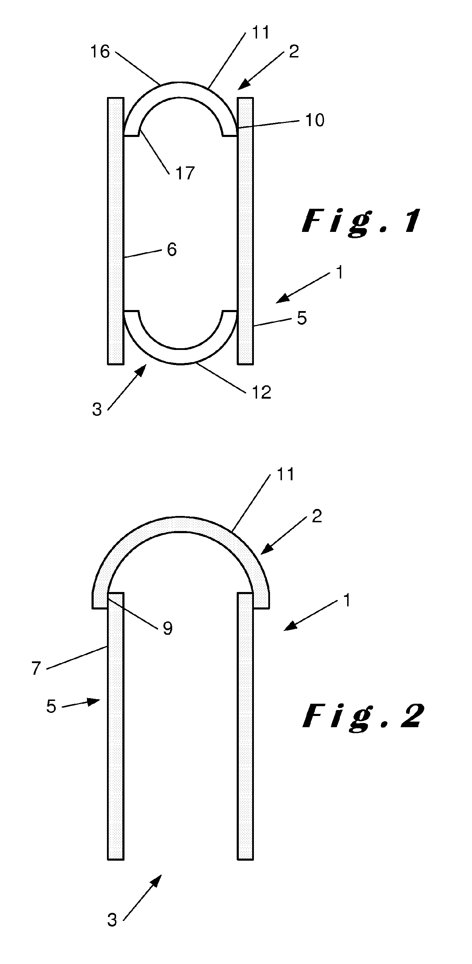

The pressure vessel shown in figure 1 comprises a main body 1. The main body comprises an upright circumferential wall 5, with an inner and outer face 6, 7. The upright circumferential wall 5 of the main body 1 encloses a central volume 4 and has at least one open end 2, 3. However, both ends 2, 3 may be open as well. The main body 1 may for example be substantially cylindrical, but any other suitable shape may be used as well, for example the shape of a truncated cone or any other shape.

At least one open end 2 of the circumferential side wall 5 of the main body 1, preferably the top end, is closed off with a first dome shaped end part 11. The dome preferably has a regular shape, which is symmetrical with respect to a symmetry plane running in height direction of the pressure vessel. The end part 11 may however also have an asymmetrical shape in case the application so requires. The first end part 11 comprises an inner and an outer face 16, 17.

The second open end 3 of the circumferential side wall 5 is closed off by a second end part 12. The second end part 12 comprises an inner and an outer face similarly to the first end part 11. The second end part 12 may take any shape considered suitable by the person skilled taking into account the envisaged use of the pressure vessel. In that way the second end part 12 may contain a disc shaped end wall functioning as a bottom support face for the pressure vessel. In that case the end part 12 will usually also comprise an upright circumferential rim which is fastened to an outer or inner face of the circumferential side wall 5 of the main body 1. This way the second end part 12 can function as a supporting bottom for the pressure vessel. However, also the second open end 3 opposite the first open end 2 of the main body 5 is closed off with a dome shaped second end part 12. The first and second end parts 11, 12 may have the same or a different dome shape. They may have the same or different dimensions.

The first and/or second end part 11, 12 may be fastened to the main body 1 in various ways. According to a first preferred embodiment shown in figure 1, the first end part 11 is fastened along its outer face 16 to an inner face 6 of the upright circumferential wall of the main body. Fastening is usually established along a circumferential connecting rim 10. The width of the connecting rim may be smaller or larger and can easily be established by the person skilled in the art taking into account the dimensions of the end part 11, 12 and the pressure prevailing in the pressure vessel to which the end part should resist. With such a connection, the dome shaped first end part 11 is somewhat countersunk with respect to the circumferential upright wall 5 of the main body. This countersunk positioning and the connection along the facing outer wall 16 of the end part and inner wall 6 of the circumferential side wall of the main body, provide a connection with an improved pressure resistance as compared to the state of the art connection. As a result, a reduced material thickness may be used for the end parts 11, 12, without adversely affecting the pressure resistance of the pressure vessel. According to a second possible embodiment shown in figure 2, the first end part 11 is fastened along an inner circumferential rim 9 on its inner face 17 to an outer face 7 of the upright circumferential side wall 5 of the main body 1. However, the first end part 11 may also be fastened along a circumferential edge 8 at its end part to an upper terminal edge 18 of the circumferential wall 5 of the main body 1.

The first dome shaped end part 11 is preferably produced as follows. It is preferred to use a mandrel with the shape of a closed figure, at least part of which is preferably dome shaped. More preferably the mandrel has a continuous rounded surface. However, to provide an economically feasible process the use of a mandrel having the shape of a closed rounded figure with at least one symmetry plane, defining a first and a second mandrel part on opposite sides of the symmetry plane, is most preferred. Thereby, preferably at least part of each of the first and second mandrel part is dome shaped. The mandrel may be shaped to provide two identical parts of the same size and shape, the mandrel may however also be shaped to provide a first part in a first shape and a second part in a second shape, or to provide a first and second part with different dimensions.

The end part 11 is produced as follows:
1. in a first step a first layer of at least one thermoplastic film having the appropriate thickness is applied over the mandrel surface. If the circumstances so require, two or more thermoplastic films of the same or different material may be applied on top of each other.
2. a second layer of at least one thermoplastic film having the appropriate thickness and continuous reinforcing fibers is applied on top of the second layer to produce a closed body enclosing the entire mandrel surface. If the circumstances so require, two or more thermoplastic films of the same or different material may be applied on top of each other.
3. If so desired, one or more additional layers of a thermoplastic film and continuous fibrous reinforcing material may be applied on top of the second layer. However this is not mandatory.
4. The material is heated to soften the thermoplastic material and cause fusion of the thermoplastic material and the fibrous reinforcement. After having been left to cool, the thus obtained closed body is divided into at least one dome shaped part and a remaining part, and the dome shaped part and remaining part are removed from the mandrel. In case use is made of a mandrel having the shape of a closed rounded figure with at least one symmetry plane, the closed body formed around the mandrel is cut along the symmetry plane to provide two virtually identical parts, which is the most economic as waste production is reduced to a miniumum. For example use can be made of a ball shaped or oval shaped mandrel with a symmetry plane dividing the mandrel in two identical parts.
The first, second and additional layers may be made of the same or a different thermoplastic film, but preferably are made of the same film. The second and additional layers may be made of the same or a different fibrous reinforcing material, this will be determined by the person skilled in the art taking into account the intended use.

In case the pressure vessel of this invention is to be used as a reservoir for heated fluids or gasses, preferably a metal sheet or film is applied between the first and second layer. Preferably aluminum foil is used to achieve optimum liquid and gas tightness.

The division of the closed body into the end parts may be established using any technique considered suitable by the person skilled in the art, for example cutting, or sawing or any other technique. When necessary, the thus obtained end parts may be cut so that they have the required size. However, as the mandrel used in the present invention is a low cost tool, it can be easily made in such a way that it corresponds closely to the shape and dimensions of the end parts to be produced.

When fastening the end part 11, 12 to the main body, the fastening is preferably established from the inner side of the main body facing the central volume 4, to achieve the most reliable, pressure resistant connection. Suitable techniques include glueing, welding, laser welding and induction welding. Induction and laser welding are preferred techniques. The induction or laser welding is preferably carried out along the inner side of the end part 11, 12 and main body 6, 17 facing the central volume 4 of the pressure vessel 1, as it is this side which is most intensively subjected to the pressure remaining in the pressure vessel. The techniques of induction or laser welding are preferred as the quality of the weld may be inspected while establishing the connection, and the laser energy adapted accordingly. The first and second layer and any further layers of thermoplastic and fibrous reinforced thermoplastic material, and the face of the end part and main body to be welded, may be located more or less close to one another. The device used to carry out the welding contains a detector for detecting whether or not a weld has been established, and a control device for adapting the laser energy in case no welding has been established. In case the weld shows imperfections, i.e. positions where no connection has been established, the laser welding may be repeated. As the laser is moved with respect to the body that needs to be welded, the technique may be repeated several times to improve the connection without adversely affecting the material that needs to be welded. In the embodiment shown in figure 1, welding is established by moving the laser along the inner face 17 of the dome shaped end part 11. The connection is to be established along the circumferential rim 10. In the embodiment shown in figure 2, the connection is established by moving the laser along the inner surface of the circumferential wall 5 of the main body 1. The connection is to be established, along the circumferential rim 9.

The continuous fibers used in the present invention may be any continuous fibers considered suitable by the person skilled in the art, for example glass fibers, synthetic fibers like polyester fibers for example aramid, polyethylene, or natural fibers like cotton, flax, carbon etc. Continuous fibers are understood to designate fibers having a length longer than 25 mm, preferably longer than 50 mm. The fibrous material may contain reinforcing fibers commingled with a thermoplastic material, for example polypropylene as this material shows good chemical resistance and is commercially available at an economic price. Preferably however continuous fibers take the shape of a mat, a fabric, a braided or knitted material. The fabric may be woven or non-woven provided the fibers contained in it have at least the above-mentioned length. The thickness of the layer of fibrous reinforcing material can be established by the person skilled in the art taking into account the dimensions of the pressure vessel, the circumferential wall and the end parts and the pressure which the pressure vessel has to withstand.

The thermoplastic material used in the pressure vessel of this invention is preferably a material chosen from the group of polypropylene, polyamide, polyester for example polyethylene tereftalate or polybutylenetereftalate. However any other thermoplastic material may be used as well. The material may comprise the usual additives such as fillers, pigments, additional short reinforcing fibers, anti-corrosion agents in case it is the intention to use the pressure vessel as a container for corrosive fluids, flame retardants etc. The thickness of the layer of thermoplastic film can be established by the person skilled in the art taking into account the dimensions of the pressure vessel, the circumferential wall and the end parts and the pressure which the pressure vessel has to withstand.

Both the main body 1 and the first and second end part 11, 12 are made of a multi-layer composite material. The main body may be made of the same material as the end parts, or of a different material. This means that the number of layers comprised in the main body and the end parts may be the same or different and that the nature of the materials comprised in the main body and end parts may be the same or different. The main body 1 preferably comprises an inner layer of a first thermoplastic material, an outer layer of a second thermoplastic material, which sandwich between them a layer of a continuous fibrous reinforcing material. If so desired further layers may be added to increase the pressure resistance of the main body. In case the pressure vessel is intended to be used as a reservoir for gasses or a heated liquid, preferably a layer of a metal sheet or foil is applied between the first and second layer. More preferably aluminum foil is used to achieve optimum liquid and gas tightness. The first and the second thermoplastic material may be the same or different, but preferably are the same for reasons of compatibility. The end part 11, 12 preferably comprises an inner layer of a thermoplastic material, an second layer of a fibrous reinforced thermoplastic material. If so desired further layers may be added to increase the pressure resistance. The thermoplastic material used in the main body and end parts may be the same or different, but preferably is the same for reasons of compatibility.

The pressure vessel of the present invention is capable of withstanding pressures well over 75 bar.

The pressure vessel of this invention may comprise one single main body or a plurality of main bodies that are connected to each other. In that case each main body preferably comprises its own end part.

## Claims

1. A method for producing a pressure tight pressure vessel comprising a hollow main body (1) with a circumferential side wall (5) enclosing a central volume (4) of the vessel and at least one open end (2, 3) which is closed off by an end part (11, 12), the end part being fastened to the main body at the position of the at least one open end along its circumference (10), wherein the main body (1) is made of a material comprising at least one layer of a thermoplastic film present on an inner side (6) of the main body facing the central volume, the thermoplastic film being fastened to at least one further layer of a thermoplastic film reinforced with continuous fibers, wherein the end part (11, 12) is made of a material comprising at least one layer of a thermoplastic film at an inner side (17) of the end part (11, 12) facing the central volume (6), which at least one layer of thermoplastic film is fastened to at least a first layer of a thermoplastic film reinforced with a continuous fibrous reinforcing material,
**characterized in that**
the end part (11, 12) is produced by
- applying a first layer of a thermoplastic film over a surface of a mandrel,
- applying a second layer of a thermoplastic film and continuous fibrous reinforcing material on top of the first layer in such a way that a closed body is produced,
- dividing the thus obtained closed body into at least a first (11) and a second part (12), at least the first part forming the end part of the main body.

2. A method as claimed in claim 1, **characterized in that** the mandrel has the shape of a closed figure, at least part of the mandrel having a shape that corresponds to the shape of the end part (11, 12).

3. A method as claimed in claim 1 or 2, **characterized in that** the mandrel has the shape of a closed rounded figure with at least one symmetry plane, defining a first and a second mandrel part at least part of which is dome shaped, and **in that** the closed body formed around the mandrel is cut along the symmetry plane, thus providing two dome shaped end parts (11, 12).

4. A method as claimed in any one of claims 1-3, **characterized in that** the laser welding for fastening the end part to side wall (5) of the main body is carried out along the inner side of the end part (11, 12) and main body (6, 17) facing the central volume (4) of the pressure vessel (1).

5. A method as claimed in any one of claims 1-4, **characterized in that** the end part (11, 12) is fastened along an outer circumferential rim (10) on an outer wall (16) of the end part, to an inner face (6) of the side wall (5) of the main body (1), at the position of the at least one open end.

6. A method as claimed in claim 5, **characterized in that** the end part (11, 12) is somewhat countersunk with respect to the circumferential side wall (5) of the main body.

7. A method as claimed in any one of claims 1-4, **characterized in that** the end part (11, 12) is fastened along an inner circumferential rim (9) on an inner wall of the end part (17) to an outer face (7) of the side wall (5) of the main body (1) at the position of the at least one open end.

8. A method as claimed in any one of claims 1-4, **characterized in that** a lower circumferential edge (8) of the end part is fastened to a circumferential edge (18) of the circumferential side wall (5) of the main body (1) along the at least one open end (2, 3).

9. A method as claimed in any one of claims 1-8, **characterized in that** the end part is produced by applying a third layer of a thermoplastic film and a continuous fibrous reinforcing material on top of the second layer.

10. A method as claimed in any one of claims 1-9, **characterized in that** the first end part (11) is fastened in circumferential direction to the circumferential side wall (5) of the main body (1) at the at least one open end (2, 3) from the inner side (6) of the main body.

11. A method as claimed in claim 10, **characterized in that** fastening of the first end part (11) to the main body is carried out using a technique selected from glueing, welding, induction welding and laser welding.

12. A method as claimed in any one of claims 1-11, **characterized in that** a layer of a metal sheet is applied between the first and second layer of thermoplastic material.

13. A pressure tight pressure vessel comprising a hollow main body (1) with a circumferential side wall (5) enclosing a central volume (6) and at least one open end (2, 3) which is closed off by an end part (12, 13) which is fastened to the main body along a circumferential rim, wherein the side wall (5) of the main body (1) is made of a material comprising at least one outer layer of a thermoplastic film reinforced with continuous fibers, which is fastened to at least one inner layer of a thermoplastic film on a side facing the central volume (6), wherein the end part (11, 12) is dome shaped and is made of a material comprising a first outer layer of a thermoplastic film reinforced with continuous fibrous reinforcing material and a second inner layer of a thermoplastic film, the inner layer facing the central volume (6),
**characterized in that**
the end part (11, 12) is substantially dome shaped and is fastened along a circumferential rim (9, 10) to the circumferential side wall of the main body (5) by means of a weld.

14. A pressure tight vessel as claimed in claim 13, **characterized in that** the main body (1) comprises an upper and a lower open end (2, 3) and **in that** the upper and lower end are closed off by the dome shaped end part (11, 12).

15. A pressure tight vessel as claimed in claim 13 or 14, **characterized in that** the end part (11, 12) is fastened along an outer circumferential rim (10) on its outer face (16) to an inner face of the circumferential side wall (5) of the main body (1) and **in that** the end part (11, 12) is somewhat countersunk with respect to an upper edge (8) of the circumferential wall of the main body.

16. A pressure tight vessel as claimed in claim 13 or 14, **characterized in that** the end part (11, 12) is fastened along an inner circumferential rim (9) on its inner face (17) to an outer face (7) of the circumferential side wall (5) of the main body (1).
